# EUROPEAN PATENT SPECIFICATION

(11) **EP 3 954 961 B1**
(45) Date of publication and mention of the grant of the patent: **12.06.2024**
(21) Application number: 20802012.3
(22) Date of filing: 21.04.2020
(51) Int. Cl.: F28D 9/00, F28F 3/08, F28F 13/18, F24F 7/08, F24F 3/147, F24F 12/00, F28D 21/00, F24F 3/14

(54) **TOTAL HEAT EXCHANGE ELEMENT**
GESAMTWÄRMEAUSTAUSCHELEMENT
ÉLÉMENT ÉCHANGEUR DE CHALEUR TOTALE

(30) Priority: 09.05.2019 JP 2019088844
(43) Date of publication of application: 16.02.2022
(73) Proprietor: DAIKIN INDUSTRIES, LTD., Osaka-Shi, Osaka 530-0001 (JP)
(72) Inventor: NAKAZAWA, Takema, Osaka-shi, Osaka 530-8323 (JP); KASAI, Masaya, Osaka-shi, Osaka 530-8323 (JP)
(74) Representative: Hoffmann Eitle
(86) International application number: PCT/JP2020/017121
(87) International publication number: WO 2020/226047

(56) References cited:
- WO-A1-2009/004695
- WO-A1-2018/131719
- JP-A- H1 054 691
- JP-A- H06 194 093
- JP-A- H08 219 676
- JP-A- H09 280 765
- JP-A- 2001 027 489
- JP-A- 2002 228 382
- JP-A- 2003 148 892
- JP-A- 2007 285 598
- JP-A- 2017 020 779
- JP-A- 2018 004 134
- JP-A- 20010 027 489
- JP-B2- S5 230 821
- JP-B2- S5 846 325
- US-A1- 2006 086 125
- US-A1- 2012 061 045

## Description

### TECHNICAL FIELD

The present disclosure relates to a total heat exchange element.

### BACKGROUND ART

A total heat exchange element having a partition plate including a base layer and a moisture permeable membrane layer provided on the base layer has been known (see, e.g., Japanese Patent No. 5230821). This total heat exchange element having the partition plate including the base layer and the moisture permeable membrane layer solves a problem of condensed water that drips when the element is used in a high-humidity environment.

Other examples of the prior art can be seen in documents JP 2001 027489 A and US 2012/061045 A1, which show examples of a total heat exchange element according to the preamble of claim 1.

### SUMMARY OF THE INVENTION

### TECHNICAL PROBLEM

The above total heat exchange element has a plurality of partition plates arranged side by side. However, the arrangement of the partition plates that allows each of the partition plates to exhibit the best possible performance has not been fully studied.

An object of the present disclosure is to effectively utilize a partition plate including a base and a moisture permeable membrane.

### SOLUTION TO THE PROBLEM

A first aspect of the present invention is directed to a total heat exchange element (30) including: a plurality of partition plates (31) arranged at intervals, each of the partition plates (31) including a base (32) having a first principal surface (32a) and a second principal surface (32b), and a moisture permeable membrane (33) provided on or close to the first principal surface (32a) of the base (32). First flow paths (36) through which air flows and second flow paths (37) through which air having a higher water vapor pressure than the air in the first flow paths (36) flows are alternately arranged with an associated one of the partition plates (31) sandwiched between adjacent ones of the first flow paths (36) and the second flow paths (37). In each of the plurality of partition plates (31), the first principal surface (32a) of the base (32) faces a corresponding one of the first flow paths (36), and the second principal surface (32b) of the base (32) faces a corresponding one of the second flow paths (37). At least a portion of the moisture permeable membrane is exposed from the first principal surface of the base, and an exposed surface of the moisture permeable membrane is different in color from the second principal surface of the base.

As a result of intensive studies, the inventors of the present application have found that the base (32) shows a lower moisture resistance than the moisture permeable membrane (33), or the moisture permeable membrane (33) shows a lower moisture resistance than the base (32), depending on the relative humidity of the surrounding environment. Further intensive studies by the present inventors have revealed that use of the partition plate (31) in a state in which the first principal surface (32a) of the base (32) faces a predetermined space, and the second principal surface (32b) of the base (32) faces a space with a higher water vapor pressure than the predetermined space, particularly under a relative humidity condition in which the base (33) shows a lower moisture resistance than the moisture permeable membrane (33), in a case where the moisture permeable membrane (33) is formed on the first principal surface (32a) of the base (32) allows more moisture to pass through the partition plate (31) than through the partition plate (31) with the directions of the first and second principal surfaces reversed, i.e., the amount of moisture moving through the partition plate (31) increases. These findings are applied to the total heat exchange element of the first aspect. The first flow paths (36) and the second flow paths (37) are alternately arranged with an associated one of the partition plates (31) sandwiched therebetween, and each of the partition plates (31) is arranged with the first principal surface (32a) facing a corresponding one of the first flow paths (36), and the second principal surface (32b) facing a corresponding one of the second flow paths (37). This can maximize the amount of moisture moving through the partition plate (31) having the base (32) and the moisture permeable membrane (33) when the water vapor pressure is higher in the second flow path (37) than in the first flow path (36), and thus, the partition plate (31) can be effectively used.

A second aspect of the present invention is an embodiment of the first aspect. In the second aspect, the moisture permeable membrane (33) is provided on the first principal surface (32a) of each base (32).

In the second aspect, the partition plate (31) having the base (32) and the moisture permeable membrane (33) can be easily manufactured.

According to the first aspect, at least a portion of the moisture permeable membrane (33) is exposed from the first principal surface (32a) of the base (32), and an exposed surface of the moisture permeable membrane (33) is different in color from the second principal surface (32b) of the base (32).

In this aspect, the surface of the partition plate (31) on which the moisture permeable membrane (33) is provided and the surface of the partition plate (31) on which no moisture permeable membrane (33) is provided can be visually distinguished from each other. This can reduce errors during assembly of the total heat exchange element (30).

A third aspect of the present invention is directed to a method of using a total heat exchange element (30), the total heat exchange element (30) including: a plurality of partition plates (31) arranged at intervals, each of the partition plates (31) including a base (32) having a first principal surface (32a) and a second principal surface (32b), and a moisture permeable membrane (33) provided on or close to the first principal surface (32a) of the base (32), wherein first flow paths (36) through which air flows and second flow paths (37) through which air having a higher water vapor pressure than the air in the first flow paths (36) flows are alternately arranged with an associated one of the partition plates (31) sandwiched between adjacent ones of the first flow paths (36) and the second flow paths (37), and in each of the plurality of partition plates (31), the first principal surface (32a) of the base (32) faces a corresponding one of the first flow paths (36), and the second principal surface (32b) of the base (32) faces a corresponding one of the second flow paths (37). At least a portion of the moisture permeable membrane (33) is exposed from the first principal surface (32a) of the base (32), and an exposed surface of the moisture permeable membrane (33) is different in color from the second principal surface (32b) of the base (32). The method includes using the total heat exchange element (30) with the air flowing through the first flow paths (36) and the air having a higher water vapor pressure than the air in the first flow paths (36) flowing through the second flow paths (37).

The above findings are applied to the method of the third aspect. The total heat exchange element (30) is used with the first principal surface (32a) facing the first flow path (36) through which the air flows, and the second principal surface (32b) facing the second flow path (37) through which the air having a higher water vapor pressure than the air in the first flow path (36) flows. This can maximize the amount of moisture moving through the partition plate (31) having the base (32) and the moisture permeable membrane (33) when the water vapor pressure is higher in the second flow path (37) than in the first flow path (36), and thus, the partition plate (31) can be effectively used.

### BRIEF DESCRIPTION OF THE DRAWINGS

FIG. 1 is a schematic diagram illustrating a ventilation device including a total heat exchange element according to an embodiment.
FIG. 2 is a schematic perspective view illustrating the total heat exchange element according to the embodiment.
FIG. 3 is a cross-sectional view illustrating an essential portion of the total heat exchange element according to the embodiment.
FIG. 4 is a cross-sectional view illustrating an essential portion of a total heat exchange element according to another embodiment.

### DESCRIPTION OF EMBODIMENTS

A total heat exchange element (30) according to an embodiment of the present invention will be described below.

### - Ventilation Device -

The total heat exchange element (30) according to this embodiment is provided for a ventilation device (10). The ventilation device (10) including the total heat exchange element (30) will be described below.

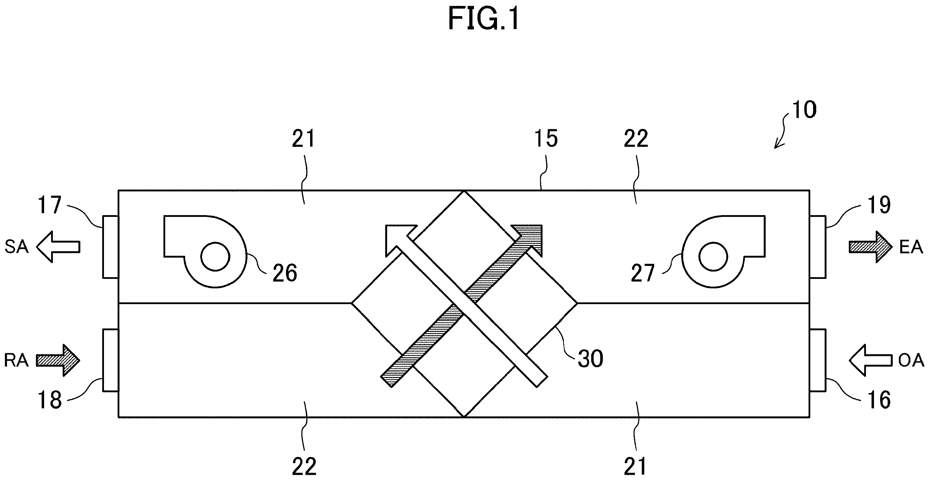

As illustrated in FIG. 1, the ventilation device (10) includes a casing (15) that houses the total heat exchange element (30). The casing (15) includes an outdoor air inlet (16), an air supply port (17), an indoor air inlet (18), and an exhaust port (19). An air supply passage (21) and an exhaust passage (22) are formed in an internal space of the casing (15). The air supply passage (21) has an end connected to the outdoor air inlet (16). The other end of the air supply passage (21) is connected to the air supply port (17). The exhaust passage (22) has an end connected to the indoor air inlet (18). The other end of the exhaust passage (22) is connected to the exhaust port (19).

The total heat exchange element (30) is arranged to cross the air supply passage (21) and the exhaust passage (22). The total heat exchange element (30) is disposed in the casing (15) such that first air flow paths (36) to be described later communicate with the air supply passage (21), and second air flow paths (37) to be described later communicate with the exhaust passage (22). The total heat exchange element (30) will be described in detail later.

The ventilation device (10) further includes an air supply fan (26) and an exhaust fan (27). The air supply fan (26) is disposed downstream of the total heat exchange element (30) in the air supply passage (21) (i.e., near the air supply port (17)). The exhaust fan (27) is disposed downstream of the total heat exchange element (30) in the exhaust passage (22) (i.e., near the exhaust port (19)).

In the ventilation device (10), outdoor air flows through the air supply passage (21) toward the inside of the room, and indoor air flows through the exhaust passage (22) toward the outside of the room. The total heat exchange element (30) exchanges sensible heat and moisture (latent heat) between the outdoor air flowing through the air supply passage (21) and the indoor air flowing through the exhaust passage (22).

### - Total Heat Exchange Element -

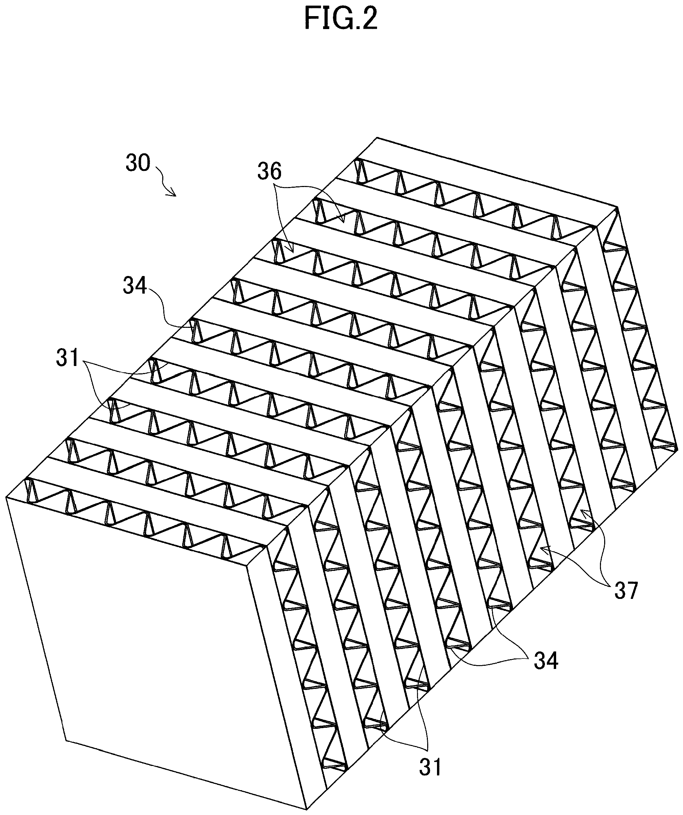

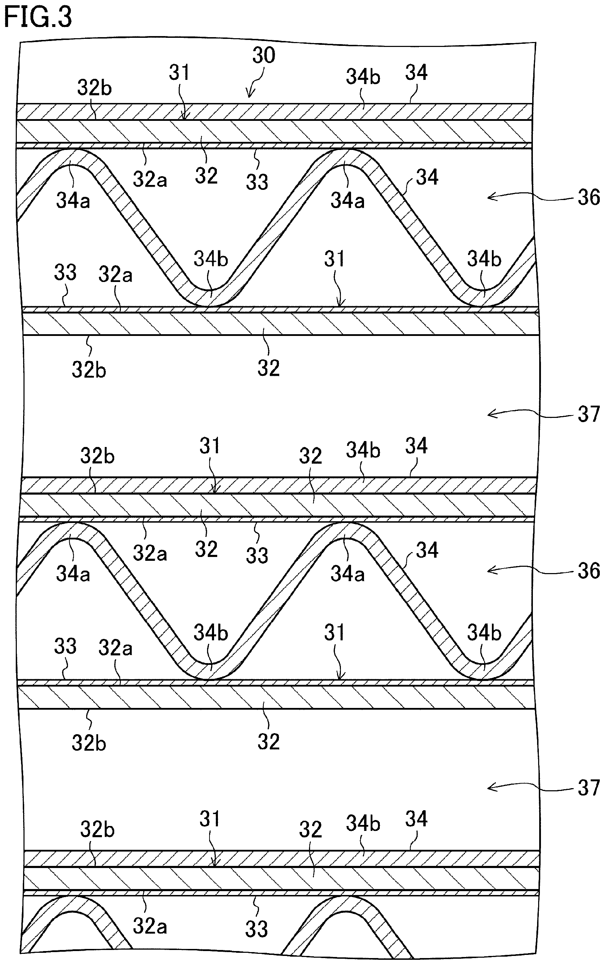

As illustrated in FIGS. 2 and 3, the total heat exchange element (30) is a cross-flow heat exchanger having the first air flow paths (36) and the second air flow paths (37). The total heat exchange element (30) includes a plurality of partition plates (31) and a plurality of spacing members (34) which are alternately stacked to form a quadrangular prism as a whole. In the total heat exchange element (30), a distance between each adjacent pair of the partition plates (31) is substantially kept constant by an associated one of the spacing members (34).

The partition plates (31) are configured as flat sheet-like members that are generally square in plan view. Each of the partition plates (31) has a porous base (32) and a moisture permeable membrane (33). The partition plate (31) has a thickness of 30 µm or less, but is not limited to have this thickness.

The porous base (32) is a plate-shaped member having a first principal surface (32a) and a second principal surface (32b). The material of the porous base (32) is, for example, a nonwoven fabric of resin, metal, glass, or pulp, or a film of resin or metal. The porous base (32) has a thickness of several tens of µm, but is not limited to have this thickness. The porous base (32) is permeable to moisture. The porous base (32) constitutes a base.

The moisture permeable membrane (33) is a sheet-like member provided on the first principal surface (32a) of the porous base (32). The moisture permeable membrane (33) covers the first principal surface (32a) of the porous base (32). No moisture permeable membrane (33) is provided on the second principal surface (32b) of the porous base (32). The moisture permeable membrane (33) is made of a polymer material containing a hydrophilic group and a hydrophobic group, e.g., polyurethane. The moisture permeable membrane (33) has a thickness of 1 µm or less, but is not limited to have this thickness. An exposed surface of the moisture permeable membrane (33), i.e., a surface facing the first air flow path (36), is different in color from the second principal surface (32b) of the porous base (32).

The spacing members (34) are configured as corrugated plate-shaped members that are generally square in plan view. Each of the spacing members (34) has a plurality of ridges (34a) each having linear ridge lines, and a plurality of valleys (34b) each having linear bottom lines. The ridge lines of the ridges (34a) and the bottom lines of the valleys (34b) are substantially parallel to each other. Each of the spacing members (34) has the ridges (34a) and the valleys (34b) alternately formed. Each of the spacing members (34) maintains the distance between the partition plates (31) arranged on both sides of the spacing member (34).

In the total heat exchange element (30), the first air flow paths (36) and the second air flow paths (37) are alternately formed in the stacking direction of the partition plates (31) and the spacing members (34), i.e., the direction of the center axis of the total heat exchange element (30). Each of the partition plates (31) separates an adjacent pair of the first air flow path (36) and the second air flow path (37) from each other. The first air flow paths (36) constitute first flow paths, and the second air flow paths (37) constitute second flow paths.

In the total heat exchange element (30), adjacent ones of the spacing members (34) with an associated one of the partition plates (31) interposed therebetween are arranged such that the direction of the ridge lines of one of the spacing members (34) are substantially orthogonal to the direction of the ridge lines of the other spacing member (34). This arrangement provides the total heat exchange element (30) with the first air flow paths (36) that open in a pair of opposed side surfaces of the total heat exchange element (30), and the second air flow paths (37) that open in the other pair of opposed side surfaces.

As illustrated in FIG. 3, each of the partition plates (31) is arranged such that the first principal surface (32a) provided with the moisture permeable membrane (33) faces the corresponding first air flow path (36). In other words, each of the partition plates (31) is arranged such that the second principal surface (32b) provided with no moisture permeable membrane (33) faces the corresponding second air flow path (37). The partition plates (31) adjacent to each other across the first air flow path (36) have the first principal surfaces (32a) facing each other. The partition plates (31) adjacent to each other across the second air flow path (37) have the second principal surfaces (32b) facing each other.

### - Arrangement of Total Heat Exchange Element -

For example, consider a state in which the indoor air has a lower water vapor pressure than the outdoor air, like in summer. In such a state, the total heat exchange element (30) is arranged such that the second air flow paths (37) communicate with the air supply passage (21), and the first air flow paths (36) communicate with the exhaust passage (22). Thus, the second principal surface (32b) of the porous base (32) is arranged to face the second air flow path (37) communicating with the air supply passage (21) through which the outdoor air having a higher water vapor pressure than the air in the exhaust passage (22) flows, and the first principal surface (32a) of the porous base (32) is arranged to face the first air flow path (36) communicating with the exhaust passage (22) through which the indoor air having a lower water vapor pressure than the air in the air supply passage (21) flows.

Then, consider a state in which the outdoor air has a lower water vapor pressure than the indoor air, like in winter, for example. In such a state, the total heat exchange element (30) is arranged such that the first air flow paths (36) communicate with the air supply passage (21) and the second air flow paths (37) communicate with the exhaust passage (22). Thus, the first principal surface (32a) of the porous base (32) faces the first air flow path (36) communicating with the air supply passage (21) through which the outdoor air having a lower water vapor pressure than the air in the exhaust passage (22) flows, and the second principal surface (32b) of the porous base (32) faces the second air flow path (37) communicating with the exhaust passage (22) through which the indoor air having a higher water vapor pressure than the air in the air supply passage (21) flows.

As described above, the air flows through the first air flow path (36) of the total heat exchange element (30), and the air having a higher water vapor pressure than the air in the first air flow path (36) flows through the second air flow path (37) of the total heat exchange element (30). In other words, the total heat exchange element (30) of this embodiment is used with the air having a lower water vapor pressure than the air in the second air flow path (37) flowing through the first air flow path (36), and the air having a higher water vapor pressure than the air in the first air flow path (36) flowing through the second air flow path (37).

### - Advantages of Embodiment -

The total heat exchange element (30) of the present embodiment includes: a plurality of partition plates (31) arranged at intervals, each of the partition plates (31) including a porous base (32) having a first principal surface (32a) and a second principal surface (32b), and a moisture permeable membrane (33) provided on or close to the first principal surface (32a) of the porous base (32), wherein first air flow paths (36) through which air flows and second air flow paths (37) through which air having a higher water vapor pressure than the air in the first air flow paths (36) flows are alternately arranged with an associated one of the partition plates (31) sandwiched between adjacent ones of the first air flow paths (36) and the second air flow paths (37), and in each of the plurality of partition plates (31), the first principal surface (32a) of the base (32) faces a corresponding one of the first air flow paths (36), and the second principal surface (32b) of the base (32) faces a corresponding one of the second air flow paths (37). The above findings are applied to the total heat exchange element (30). The first air flow paths (36) and the second air flow paths (37) are alternately arranged with an associated one of the partition plates (31) sandwiched therebetween, and each of the partition plates (31) is arranged with the first principal surface (32a) facing a corresponding one of the first air flow paths (36), and the second principal surface (32b) facing a corresponding one of the second air flow paths (37). This can maximize the amount of moisture moving through the partition plate (31) having the porous base (32) and the moisture permeable membrane (33) when the water vapor pressure is higher in the second air flow path (37) than in the first air flow path (36), and thus, the partition plate (31) can be effectively used.

The total heat exchange element (30) of the present embodiment includes the moisture permeable membrane (33) provided on the first principal surface (32a) of the porous base (32). Thus, the partition plate (31) having the porous base (32) and the moisture permeable membrane (33) can be easily manufactured.

In the total heat exchange element (30) of the present embodiment, at least a portion of the moisture permeable membrane (33) is exposed from the first principal surface (32a) of the porous base (32), and an exposed surface of the moisture permeable membrane (33) is different in color from the second principal surface (32b) of the porous base (32). Thus, the surface of the partition plate (31) on which the moisture permeable membrane (33) is provided and the surface of the partition plate (31) on which no moisture permeable membrane (33) is provided can be visually distinguished from each other. This can reduce errors during assembly of the total heat exchange element (30).

The method of using the total heat exchange element (30) of the present embodiment includes using the total heat exchange element (30) with the air flowing through the first air flow paths (36) and the air having a higher water vapor pressure than the air in the first air flow paths (36) flowing through the second air flow paths (37). The above findings are applied to this method. The total heat exchange element (30) is used with the first principal surface (32a) facing the first air flow path (36) through which the air having a lower water vapor pressure than the air in the second air flow path (37) flows, and the second principal surface (32b) facing the second air flow path (37) through which the air having a higher water vapor pressure than the air in the first air flow path (36) flows. This can maximize the amount of moisture moving through the partition plate (31) having the porous base (32) and the moisture permeable membrane (33) when the water vapor pressure is higher in the second air flow path (37) than in the first air flow path (36), and thus, the partition plate (31) can be effectively used.

### «Other Embodiments»

The foregoing embodiment may also be configured as follows.

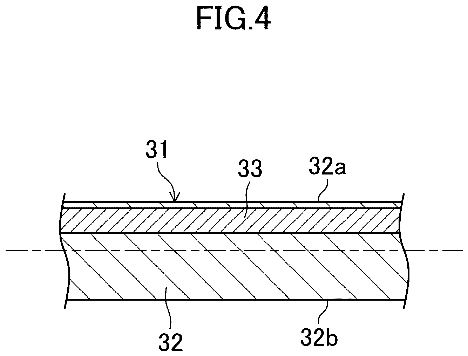

In an example, not covered by the present invention, as illustrated in FIG. 4, the moisture permeable membrane (33) may be provided in the porous base (32). In this example, the moisture permeable membrane (33) is provided in the porous base (32) near the first principal surface (32a). Specifically, the moisture permeable membrane (33) is provided in the porous base (32) to be located closer to the first principal surface (32a) than an intermediate plane indicated by a dot-dash line in FIG. 4 between the first principal surface (32a) and the second principal surface (32b).

For example, the total heat exchange element (30) may be an optional total heat exchange element other than the cross-flow total heat exchange element, such as a counterflow total heat exchange element.

For example, in the method of using the total heat exchange element (30), the total heat exchange element (30) may not be used with the air having a lower water vapor pressure than the air in the second air flow path (37) flowing through the first air flow path (36), and the air having a higher water vapor pressure than the air in the first air flow path (36) flowing through the second air flow path (37). It is only required that the total heat exchange element (30) is used in the same state for any optional period. For example, the total heat exchange element (30) may be intermittently used in the same state, or the total heat exchange element (30) may be used in the same state only at a specific time. The arrangement of the total heat exchange element (30) of the above embodiment is changed according to the season. However, a method of using the total heat exchange element (30) in the same state at any timing without changing the arrangement of the total heat exchange element (30) may also be included in the scope of the present invention.

While the embodiment and the variations thereof have been described above, it will be understood that various changes in form and details may be made without departing from the scope of the invention as defined in the claims. The foregoing embodiment and the variations thereof may be combined and modified without departing from the subject-matter as defined in the appended claims.

### INDUSTRIAL APPLICABILITY

As can be seen from the foregoing description, the present invention is useful for a total heat exchange element.

### DESCRIPTION OF REFERENCE CHARACTERS

- 30: Total Heat Exchange Element
- 31: Partition Plate
- 32: Porous Base (Base)
- 32a: First Principal Surface
- 32b: Second Principal Surface
- 33: Moisture Permeable Membrane
- 36: First Air Flow Path (First Flow Path)
- 37: Second Air Flow Path (Second Flow Path)

## Claims

1. A total heat exchange element (30), comprising: a plurality of partition plates (31) arranged at intervals, each of the partition plates (31) including a base (32) having a first principal surface (32a) and a second principal surface (32b), and a moisture permeable membrane (33) provided on or close to the first principal surface (32a) of the base (32), in such a way that
first flow paths (36) through which air flows and second flow paths (37) through which air having a higher water vapor pressure than the air in the first flow paths (36) flows are alternately arranged with an associated one of the partition plates (31) sandwiched between adjacent ones of the first flow paths (36) and the second flow paths (37), and
in each of the plurality of partition plates (31), the first principal surface (32a) of the base (32) faces a corresponding one of the first flow paths (36), and the second principal surface (32b) of the base (32) faces a corresponding one of the second flow paths (37);
**characterized in that**
at least a portion of the moisture permeable membrane (33) is exposed from the first principal surface (32a) of the base (32), and
an exposed surface of the moisture permeable membrane (33) is different in color from the second principal surface (32b) of the base (32).

2. The total heat exchange element of claim 1, wherein
the moisture permeable membrane (33) is provided on the first principal surface (32a) of each base (32).

3. A method of using a total heat exchange element (30), the total heat exchange element (30) including: a plurality of partition plates (31) arranged at intervals, each of the partition plates (31) including a base (32) having a first principal surface (32a) and a second principal surface (32b), and a moisture permeable membrane (33) provided on or close to the first principal surface (32a) of the base (32), wherein first flow paths (36) through which air flows and second flow paths (37) through which air having a higher water vapor pressure than the air in the first flow paths (36) flows are alternately arranged with an associated one of the partition plates (31) sandwiched between adjacent ones of the first flow paths (36) and the second flow paths (37), and in each of the plurality of partition plates (31), the first principal surface (32a) of the base (32) faces a corresponding one of the first flow paths (36), and the second principal surface (32b) of the base (32) faces a corresponding one of the second flow paths (37), wherein at least a portion of the moisture permeable membrane (33) is exposed from the first principal surface (32a) of the base (32), and
an exposed surface of the moisture permeable membrane (33) is different in color from the second principal surface (32b) of the base (32), the method comprising:
using the total heat exchange element (30) with the air flowing through the first flow paths (36) and the air having a higher water vapor pressure than the air in the first flow paths (36) flowing through the second flow paths (37).

## Patentansprüche

1. Gesamtwärmeaustauschelement (30), umfassend: eine Vielzahl von in Abständen angeordneten Trennplatten (31), wobei jede der Trennplatten (31) eine Basis (32) einschließt, die eine erste Hauptoberfläche (32a) und eine zweite Hauptoberfläche (32b) aufweist, und eine feuchtigkeitsdurchlässige Membran (33), die auf eine solche Weise auf oder in der Nähe der ersten Hauptoberfläche (32a) der Basis (32) bereitgestellt ist, dass
erste Strömungswege (36), durch die Luft strömt, und zweite Strömungswege (37), durch die Luft strömt, die einen höheren Wasserdampfdruck als die Luft in den ersten Strömungswegen (36) aufweist, abwechselnd mit einer zugehörigen der Trennplatten (31) angeordnet sind, die zwischen benachbarten der ersten Strömungswege (36) und der zweiten Strömungswege (37) eingeschoben ist, und
in jeder der Vielzahl von Trennplatten (31) die erste Hauptoberfläche (32a) der Basis (32) einem entsprechenden der ersten Strömungswege (36) zugewandt ist und die zweite Hauptoberfläche (32b) der Basis (32) einem entsprechenden der zweiten Strömungswege (37) zugewandt ist;
**dadurch gekennzeichnet, dass**
mindestens ein Abschnitt der feuchtigkeitsdurchlässigen Membran (33) von der ersten Hauptoberfläche (32a) der Basis (32) freigelegt ist, und
sich eine freigelegte Oberfläche der feuchtigkeitsdurchlässigen Membran (33) in der Farbe von der zweiten Hauptoberfläche (32b) der Basis (32) unterscheidet.

2. Gesamtwärmeaustauschelement nach Anspruch 1, wobei
die feuchtigkeitsdurchlässige Membran (33) auf der ersten Hauptoberfläche (32a) jeder Basis (32) bereitgestellt ist.

3. Verfahren zur Verwendung eines Gesamtwärmeaustauschelements (30), das Gesamtwärmeaustauschelement (30) einschließend: eine Vielzahl von in Abständen angeordneten Trennplatten (31), wobei jede der Trennplatten (31) eine Basis (32) einschließt, die eine erste Hauptoberfläche (32a) und eine zweite Hauptoberfläche (32b) aufweist, und eine feuchtigkeitsdurchlässige Membran (33), die auf oder in der Nähe der ersten Hauptoberfläche (32a) der Basis (32) bereitgestellt ist, wobei erste Strömungswege (36), durch die Luft strömt, und zweite Strömungswege (37), durch die Luft strömt, die einen höheren Wasserdampfdruck als die Luft in den ersten Strömungswegen (36) aufweist, abwechselnd mit einer zugehörigen der Trennplatten (31) angeordnet sind, die zwischen benachbarten der ersten Strömungswege (36) und der zweiten Strömungswege (37) eingeschoben ist, und in jeder der Vielzahl von Trennplatten (31) die erste Hauptoberfläche (32a) der Basis (32) einem entsprechenden der ersten Strömungswege (36) zugewandt ist und die zweite Hauptoberfläche (32b) der Basis (32) einem entsprechenden der zweiten Strömungswege (37) zugewandt ist, wobei mindestens ein Abschnitt der feuchtigkeitsdurchlässigen Membran (33) von der ersten Hauptoberfläche (32a) der Basis (32) freigelegt ist, und sich eine freigelegte Oberfläche der feuchtigkeitsdurchlässigen Membran (33) in der Farbe von der zweiten Hauptoberfläche (32b) der Basis (32) unterscheidet, das Verfahren umfassend:
Verwenden des Gesamtwärmeaustauschelements (30) mit durch die ersten Strömungswege (36) strömender Luft und durch die zweiten Strömungswege (37) strömender Luft, die einen höheren Wasserdampfdruck als die Luft in den ersten Strömungswegen (36) aufweist.

## Revendications

1. Élément (30) échangeur de chaleur totale, comprenant : une pluralité de plaques de séparation (31) agencées à intervalles, chacune des plaques de séparation (31) incluant une base (32) présentant une première surface principale (32a) et une deuxième surface principale (32b), et une membrane (33) perméable à l'humidité prévue sur ou à proximité de la première surface principale (32a) de la base (32), de telle manière que
des premiers chemins d'écoulement (36) à travers lesquels de l'air s'écoule et des deuxièmes chemins d'écoulement (37) à travers lesquels de l'air présentant une pression de vapeur d'eau supérieure à celle de l'air dans les premiers chemins d'écoulement (36) s'écoule sont agencés en alternance avec une plaque associée parmi les plaques de séparation (31) prise en sandwich entre des chemins adjacents parmi les premiers chemins d'écoulement (36) et les deuxièmes chemins d'écoulement (37), et
dans chacune de la pluralité de plaques de séparation (31), la première surface principale (32a) de la base (32) est face à un chemin correspondant parmi les premiers chemins d'écoulement (36), et la deuxième surface principale (32b) de la base (32) est face à un chemin correspondant parmi les deuxièmes chemins d'écoulement (37) ;
**caractérisé en ce que**
au moins une partie de la membrane (33) perméable à l'humidité est exposée à partir de la première surface principale (32a) de la base (32), et
une surface exposée de la membrane (33) perméable à l'humidité est différente en termes de couleur de la deuxième surface principale (32b) de la base (32).

2. Élément échangeur de chaleur totale selon la revendication 1, dans lequel
la membrane (33) perméable à l'humidité est prévue sur la première surface principale (32a) de chaque base (32).

3. Procédé d'utilisation d'un élément (30) échangeur de chaleur totale, l'élément (30) échangeur de chaleur totale incluant : une pluralité de plaques de séparation (31) agencées à intervalles, chacune des plaques de séparation (31) incluant une base (32) présentant une première surface principale (32a) et une deuxième surface principale (32b), et une membrane (33) perméable à l'humidité prévue sur ou à proximité de la première surface principale (32a) de la base (32), dans lequel des premiers chemins d'écoulement (36) à travers lesquels de l'air s'écoule et des deuxièmes chemins d'écoulement (37) à travers lesquels de l'air présentant une pression de vapeur d'eau supérieure à celle de l'air dans les premiers chemins d'écoulement (36) s'écoule sont agencés en alternance avec une plaque associée parmi les plaques de séparation (31) prise en sandwich entre des chemins adjacents parmi les premiers chemins d'écoulement (36) et les deuxièmes chemins d'écoulement (37), et dans chacune de la pluralité de plaques de séparation (31), la première surface principale (32a) de la base (32) est face à un chemin correspondant parmi les premiers chemins d'écoulement (36), et la deuxième surface principale (32b) de la base (32) est face à un chemin correspondant parmi les deuxièmes chemins d'écoulement (37), dans lequel au moins une partie de la membrane (33) perméable à l'humidité est exposée à partir de la première surface principale (32a) de la base (32), et une surface exposée de la membrane (33) perméable à l'humidité est différente en termes de couleur de la deuxième surface principale (32b) de la base (32), le procédé comprenant :
l'utilisation de l'élément (30) échangeur de chaleur totale avec l'air s'écoulant à travers les premiers chemins d'écoulement (36) et l'air présentant une pression de vapeur d'eau supérieure à celle de l'air dans les premiers chemins d'écoulement (36) s'écoulant à travers les deuxièmes chemins d'écoulement (37).
